# DEMANDE DE BREVET EUROPEEN

(11) **EP 1 848 136 A1**
(43) Date de publication de la demande: **24.10.2007**
(21) Numéro de dépôt: 07290487.3
(22) Date de dépôt: 19.04.2007
(51) Int. Cl.: H04J 3/06, H04L 12/00

(54) **Synchronisation d'un terminal de telephonie IP**

(30) Priorité: 19.04.2006 FR 0603458
(71) Demandeur: AASTRA MATRA TELECOM, 78280 Guyancourt (FR)
(72) Inventeur: Chevrier, Emamnuel, 91470 Limours (FR); Mercuriali, Jean-Pierre, 91400 Orsay (FR)
(74) Mandataire: Verdure, Stéphane

(57) **Abrégé**

Un terminal (103) appartient, d'une part, à un réseau de téléphonie servi par au moins un premier serveur (102) et, d'autre part, à un réseau de transmission de données en mode paquets comportant au moins un second serveur. On reçoit au niveau du premier serveur au moins une référence temporelle provenant du second serveur. Puis, on fournit un service de synchronisation au terminal sur la base de la référence temporelle reçue au niveau du premier serveur, par envoi d'au moins un message de synchronisation (305) contenant la référence temporelle depuis le premier serveur à destination du terminal.

## Description

La présente invention se rapporte à la synchronisation de terminaux de téléphonie dans un réseau de téléphonie.

Par la suite, les termes "réseau de téléphonie" font référence à un réseau de téléphonie basé sur un protocole de transmission de données en mode paquets. Ainsi, un réseau de téléphonie sur IP ("Internet Protocol"), ou réseau de téléphonie IP, peut être un réseau IP de type Intranet par exemple.

Classiquement, dans un réseau IP, les terminaux IP sont synchronisés par rapport à une ou plusieurs sources de référence temporelle du réseau IP. De telles sources, appelés par la suite serveurs de synchronisation, peuvent être extérieures au réseau de téléphonie IP auquel appartiennent les terminaux IP considérés et, par conséquent, ne pas être synchronisées ou avoir une référence temporelle faussée. Il est alors possible que certains terminaux IP d'un même réseau de téléphonie présentent des écarts de références temporelles liés au fait qu'ils ne se sont pas synchronisés par rapport à la même source de référence temporelle. Lorsque des terminaux IP sont calés sur des références temporelles différentes, notamment, ils peuvent afficher des heures différentes sur leur écran respectif alors qu'ils devraient afficher la même heure.

On connaît également des réseaux de téléphonie IP dans lesquels les terminaux IP synchronisent leur référence temporelle à partir d'une source de référence temporelle du réseau IP, qui peut être extérieure au réseau de téléphonie, en ce qui concerne leurs applications IP autres que les applications de téléphonie, et à partir d'une source de référence temporelle comprise dans le réseau de téléphonie lorsqu'il s'agit d'une application du réseau de téléphonie. Il se peut alors qu'un même terminal IP affiche deux références horaires différentes, l'une relative aux applications IP et l'autre relative aux applications de téléphonie.

En outre, il n'est pas toujours possible pour un terminal IP appartenant en outre à un réseau local de type LAN ("Local Area Network") d'obtenir des informations de synchronisation depuis un serveur de synchronisation du réseau IP, notamment en raison des protections fournies par des barrières pare-feu (en anglais, "fire-wall").

On note également que lorsqu'un terminal IP est en mesure de se synchroniser relativement à une source de référence temporelle dans le réseau IP, il n'est pas aisé de faire en sorte qu'un autre terminal IP du réseau de téléphonie, devant par conséquent afficher la même heure, se synchronise également sur cette même source. En effet, chaque terminal IP peut en général choisir, indépendamment des autres terminaux IP du réseau de téléphonie, le serveur qu'il utilise comme source de référence temporelle.

L'invention vise à remédier à tout ou partie des inconvénients précités de l'art antérieur.

A cet effet, un premier aspect de l'invention propose un procédé de synchronisation d'une référence temporelle d'un terminal appartenant, d'une part, à un réseau de téléphonie servi par au moins un premier serveur et, d'autre part, à un réseau de transmission de données en mode paquets comportant au moins un second serveur.

Le procédé comprend les étapes consistant à :
/a/ recevoir au niveau du premier serveur au moins une référence temporelle provenant du second serveur ;
/b/ fournir un service de synchronisation au terminal sur la base de la référence temporelle reçue au niveau du premier serveur, par envoi d'au moins un message de synchronisation contenant la référence temporelle depuis le premier serveur à destination du terminal.

Grâce à ces dispositions, des informations de synchronisation sont reçues sur le premier serveur et de ce fait elles peuvent être ainsi centralisées pour l'ensemble des terminaux du réseau de téléphonie correspondant à ce premier serveur. On peut ainsi fournir une synchronisation cohérente et homogène dans un même réseau de téléphonie.

En outre, les applications de téléphonies ainsi que les applications IP de chaque terminal IP peuvent ainsi être synchronisées.

On note que, dans une telle architecture, le procédé de synchronisation des terminaux peut avantageusement être indépendant de modifications apportées à une interface offerte par le serveur de synchronisation. En effet, seul le premier serveur s'interface avec ce serveur pour la mise en oeuvre d'un tel procédé selon un mode de réalisation de la présente invention.

En outre, avant l'étape /b/, on peut prévoir une étape d'abonnement au service de synchronisation au cours de laquelle le terminal envoie au premier serveur un message de requête d'abonnement au service de synchronisation.

Dans un mode de réalisation de la présente invention, au moins l'étape d'abonnement au service de synchronisation et l'étape /b/ sont réalisées selon le protocole SIP pour ('Session Initiation Protocol').

Dans certains cas de réseau de téléphonie, les terminaux peuvent avoir des besoins de synchronisation différents, notamment lorsque certains terminaux sont dans des fuseaux horaires différents. Il peut alors être avantageux que le serveur d'appels gère différentes références temporelles.

Dans ce cas, le message de requête d'abonnement peut contenir au moins une information relative à une caractéristiques du terminal. Le premier serveur peut recevoir une pluralité de références temporelles différentes depuis un ou plusieurs seconds serveurs du réseau de transmission de données et le message de requête d'abonnement peut indiquer au moins une information relative à une caractéristique du terminal. Dans ce cas là, l'étape /b/ peut comprendre les étapes consistant à :
- déterminer, parmi la pluralité de références temporelles, une référence temporelle donnée, sur la base de l'information ;
- envoyer le message de synchronisation contenant la référence temporelle ainsi déterminée.

On peut avantageusement déclencher l'envoi des messages en fonction de l'information contenue dans le message de requête.

Dans un mode de réalisation de la présente invention, le service de synchronisation est fourni dans le cadre d'une session établie pour le service de synchronisation entre le premier serveur et le terminal, distincte d'une session d'appel téléphonique éventuellement établie entre le premier serveur et le terminal.

On note qu'avantageusement, le premier serveur peut être en outre un serveur d'appels. De manière plus générale, différents services peuvent être co-localisés.

Un deuxième aspect de la présente invention propose un serveur d'appels d'un réseau de téléphonie, adapté pour fournir un service de synchronisation à au moins un terminal appartenant, d'une part, au réseau de téléphonie et, d'autre part, à un réseau de transmission de données en mode paquets comportant au moins un serveur de réseau.

Le serveur d'appels comprend :
- une entité de réception adaptée pour recevoir au moins une référence temporelle depuis le serveur de réseau ; et
- une entité de gestion de service de synchronisation adaptée pour fournir un service de synchronisation au terminal sur la base de la référence temporelle reçue depuis le serveur de réseau.

L'entité de gestion de service de synchronisation peut être adaptée pour gérer une phase d'abonnement d'un terminal, au cours de laquelle le serveur d'appels reçoit du terminal un message de requête d'abonnement au service de synchronisation.

L'entité de gestion de service de synchronisation peut en outre être adaptée pour gérer la phase d'abonnement et fournir le service de synchronisation en échangeant avec le terminal des messages selon le protocole SIP ("Session Initiation Protocol").

L'entité de gestion de service de synchronisation peut être également adaptée pour gérer une pluralité de références temporelles et pour déterminer, parmi la pluralité de références temporelles, une référence temporelle donnée en fonction d'au moins une information relative à une caractéristique du terminal reçue au cours de la phase d'abonnement.

L'entité de gestion de service de synchronisation peut également être adaptée pour déclencher l'envoi des messages de synchronisation en fonction de l'information reçue au cours de la phase d'abonnement.

L'entité de gestion de service de synchronisation peut aussi être adaptée pour gérer la phase d'abonnement et fournir le service de synchronisation dans le cadre d'une session établie avec le terminal, distincte d'une session d'appel téléphonique éventuellement établie avec le terminal.

Un troisième aspect de la présente invention propose un terminal adapté pour opérer, d'une part, dans un réseau de téléphonie comprenant un premier serveur et, d'autre part, dans un réseau de transmission de données en mode paquets comprenant au moins un second serveur.

Le terminal comprend une entité de gestion de synchronisation de référence temporelle adaptée pour recevoir une référence temporelle via un service de synchronisation fourni par le premier serveur sur la base d'au moins une référence temporelle reçue depuis ledit second serveur.

L'entité de gestion de synchronisation peut être en outre adaptée pour gérer une phase d'abonnement comprenant une étape d'émission à destination du premier serveur d'un message de requête d'abonnement au service de synchronisation.

L'entité de gestion de synchronisation peut aussi être adaptée pour gérer la phase d'abonnement et la réception de la référence temporelle en échangeant avec le premier serveur des messages selon le protocole SIP.

Dans un mode de réalisation de la présente invention, l'entité de gestion est adaptée pour inclure au moins une information relative à une caractéristique du terminal dans le message de requête d'abonnement, laquelle information permettant au premier serveur de déterminer une référence temporelle à envoyer au terminal.

L'entité de gestion de synchronisation peut aussi être adaptée pour gérer la phase d'abonnement et la réception d'une référence temporelle dans le cadre d'une session établie avec le premier serveur, distincte d'une session d'appel téléphonique éventuellement établie avec le premier serveur.

Un quatrième aspect de la présente invention propose un système adapté pour fournir une référence temporelle à un terminal appartenant, d'une part, à un réseau de téléphonie et, d'autre part, à un réseau de transmission de données en mode paquets. Le système comprend :
- un serveur d'appels selon le deuxième aspect de la présente invention ;
- un terminal selon le troisième aspect de la présente invention; et
- un serveur de réseau compris dans le réseau de transmission de données en mode paquet.

Le serveur de réseau est alors adapté pour fournir une référence temporelle au premier serveur.

D'autres caractéristiques et avantages de l'invention apparaîtront encore à la lecture de la description qui va suivre. Celle-ci est purement illustrative et doit être lue en regard des dessins annexés sur lesquels :
- la figure 1 est un schéma illustrant une architecture d'interconnexion de réseaux entre un réseau de transmission de paquets et un réseau de téléphonie selon un mode de réalisation de la présente invention ;
- la figure 2 est un schéma illustrant une architecture similaire à celle illustrée en figure 1, dans laquelle une synchronisation de terminaux IP est réalisée par un réseau de serveur d'appels ;
- la figure 3 illustre un échange de messages entre un serveur d'appels et un terminal dans un mode de réalisation de la présente invention ;
- la figure 4 illustre un terminal selon un mode de réalisation de la présente invention ;
- la figure 5 illustre un serveur d'appels selon un mode de réalisation de la présente invention.

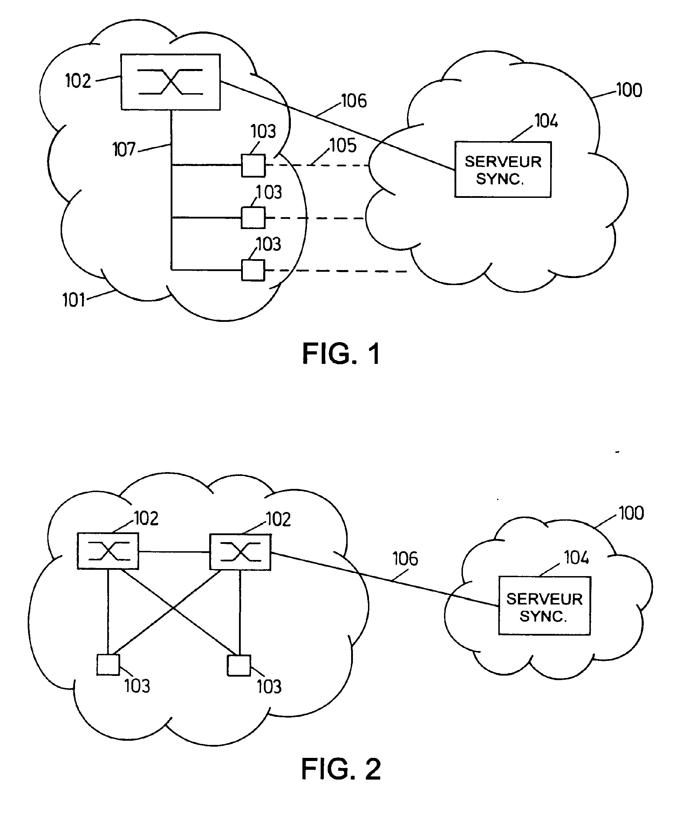

En référence à la figure 1, un réseau de téléphonie 101 comprend un premier serveur qui est un serveur d'appels 102 destiné à commuter des appels téléphoniques relatifs à des terminaux 103. A cet effet, les terminaux 103 sont reliés au serveur d'appels 102 via des liaisons 107. On peut envisager toutes sortes de liaisons. Notamment, les liaisons peuvent être filaires ou sans fils.

Un réseau IP 100 comprend un second serveur, ou serveur de réseau 104, qui est appelé serveur de synchronisation.

Le serveur d'appels 102 possède une interface adaptée pour communiquer avec le serveur de synchronisation 104 via une liaison 106, filaire ou non.

Par ailleurs, dans un mode de réalisation, les terminaux 103 sont des terminaux adaptés pour une gestion d'applications de téléphonie ainsi que pour une gestion d'applications IP distinctes des applications de téléphonie. Ils ont donc une interface leur permettant de gérer des appels téléphoniques en coopération avec le serveur d'appels, et une interface leur permettant d'accéder au réseau IP et de gérer des applications IP autres que des applications de téléphonie. De tels terminaux sont appelés "terminaux IP" dans la suite.

Les terminaux peuvent donc être reliés au réseau IP 100. Une telle liaison potentielle entre les terminaux IP et le réseau IP est représentée par des traits discontinus 105 à la figure 1.

Le serveur d'appels 102 peut recevoir une référence temporelle depuis le serveur 104 via la liaison 106. Puis en fonction de certains critères, il est alors en mesure d'envoyer aux terminaux 103 des informations de synchronisation sur la base de cette référence temporelle.

En référence à la figure 2, une architecture de réseau selon un mode de réalisation comprend plusieurs serveurs d'appels 102 en réseau qui gèrent le réseau de téléphonie 101. Dans ce cas, on peut prévoir qu'un des serveurs d'appels de ce réseau de serveurs d'appels est en charge de recevoir et de gérer les références temporelles depuis un ou plusieurs serveurs de synchronisation.

Quelle que soit l'architecture de réseau, un serveur d'appels, ou un réseau de serveur d'appels, est donc en charge de recevoir des informations de synchronisation de références temporelles depuis une ou plusieurs sources de références temporelles dans le réseau IP en vue d'une synchronisation de références temporelles des différents terminaux IP du réseau de téléphonie correspondant.

Dans un mode de réalisation, la fourniture du service de synchronisation au terminal sur la base d'informations de synchronisation reçues par le serveur d'appels depuis le serveur de synchronisation, est précédée d'un abonnement du terminal auprès du serveur d'appels pour requérir un tel service de synchronisation.

A cet effet, le terminal envoie un message de requête d'abonnement au serveur d'appels.

Dans certaines applications, il peut être très avantageux que le serveur d'appels soit en mesure de fournir un service de synchronisation dépendant de certaines caractéristiques des terminaux.

Tel peut être le cas, notamment, lorsqu'un serveur d'appels 102 est en mesure de gérer des terminaux 103 qui ne sont pas regroupés géographiquement. Dans de telles conditions, il est possible qu'il y ait un décalage horaire entre les différents emplacements de ces terminaux lié aux fuseaux horaires par exemple.

On peut alors prévoir que le serveur d'appels gère différentes références temporelles afin de pouvoir fournir des informations de synchronisation adaptées à l'emplacement des différents terminaux du réseau de téléphonie gérés par le serveur d'appels 102, ou par un réseau de serveur d'appels 102.

A cet effet, le serveur d'appels peut alors être amené à recevoir différentes références temporelles soit depuis le même serveur de synchronisation, soit depuis différents serveurs de synchronisation.

Ainsi, en fonction de certaines caractéristiques d'un terminal donné indiquant par exemple le fuseau horaire dans lequel le terminal se trouve, le serveur d'appels est alors capable de déterminer des informations de synchronisation adaptées à envoyer à ce terminal.

On peut également prévoir qu'un ou plusieurs terminaux reçoivent des messages de synchronisation plus fréquemment que d'autres terminaux, sur la base d'envois périodiques de ces messages ou encore sur la base d'envois à des moments déterminés dans la journée.

De manière plus générale, les terminaux d'un même réseau de téléphonie peuvent avoir des besoins de synchronisation différents les uns des autres en fonction de caractéristiques associées à ces terminaux.

Dans ce cas, avantageusement, le serveur d'appels, ou le réseau de serveur d'appels, gère une pluralité de références temporelles en liaison avec différentes caractéristiques de terminaux.

Ainsi, dans un mode de réalisation, le terminal s'abonne auprès du serveur d'appels à un service de synchronisation de références temporelles, en émettant un message d'abonnement incluant une information relative à une caractéristique permettant au serveur d'appels de déterminer, pour ce terminal, une référence temporelle parmi la pluralité de références temporelles gérées par le serveur d'appels.

Sur réception de ce message d'abonnement, le serveur d'appels peut en outre déterminer les moments de l'envoi de ce ou ces messages de synchronisation à ce terminal, sur la base de l'information ainsi incluse dans le message de requête. Il peut également déterminer selon des règles déterminées ces moments d'envoi.

Dit autrement, on peut prévoir d'envoyer de tels messages de synchronisation périodiquement, ou encore sur réception d'une requête d'un terminal ou encore à une heure déterminée dans la journée, en fonction des caractéristiques du terminal indiquées dans le message de requête.

Dans un mode de réalisation, lorsque le serveur d'appels n'est pas en mesure de fournir une synchronisation correspondant aux besoins du terminal qui s'est abonné, on prévoit que le terminal bascule sur une référence temporelle interne. On peut également prévoir que, dans certaines conditions, en fonction de critères déterminés, le terminal se base directement sur une référence temporelle fournie par un serveur de synchronisation. Cela peut notamment être avantageux lorsqu'on détecte que le niveau de qualité d'une synchronisation fournie par le serveur d'appels est inférieur à celui d'une synchronisation fournie par une source temporelle interne au terminal.

En outre, on peut avantageusement prévoir que le serveur d'appels reçoive des références temporelles depuis un ou plusieurs serveurs de synchronisation régulièrement, par exemple à certains moments déterminés de la journée, ou encore de manière périodique.

Dans un mode de réalisation, les échanges de messages entre les terminaux et le serveur d'appels, comprenant les messages de requête d'abonnement ainsi que le ou les messages de synchronisation, sont réalisés sur la base du protocole SIP, pour "Session Initiation Protocol", tel que défini dans le document RFC 3265 (pour "Request For Comment") Session Initiation Protocol - Specific Event Notification, Juin 2002.

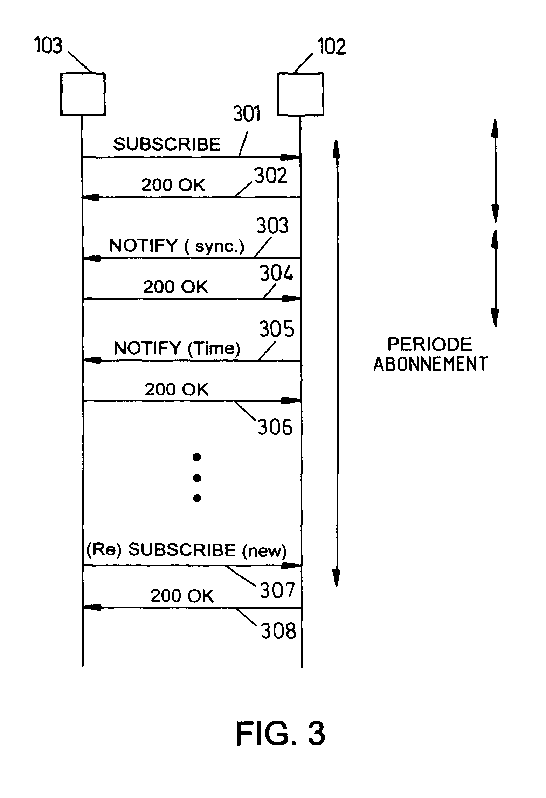

En référence à la figure 3, on va maintenant décrire de tels échanges.

Dans une phase 309 d'abonnement à un service de synchronisation, le terminal 103 émet à destination du serveur d'appels 102 un message de requête d'abonnement 301 sous la forme d'un message 'SUBSCRIBE' selon le protocole SIP. Ce message indique, de préférence, au moins une information relative à une caractéristique du terminal permettant au serveur d'appels de déterminer une référence temporelle à envoyer à ce terminal.

Puis, le serveur d'appels 102 répond à ce message, afin d'en accuser réception, par l'émission d'un message 302 sous la forme d'un message '200 OK' selon le protocole SIP.

Ensuite, dans une phase 310 de synchronisation protocolaire, le serveur d'appels 102 envoie un message 303 sous la forme d'un message 'NOTIFY' selon le protocole SIP, pour notifier le terminal d'un abonnement valide. Ce message peut ne contenir aucune information relative à la synchronisation. Pour accuser réception de ce message, le terminal émet un message 304 sous la forme d'un message '200 OK' selon le protocole SIP.

Puis, dans une phase 311, le serveur d'appels 102 envoie au terminal un message 305, à nouveau sous la forme d'un message 'NOTIFY' selon le protocole SIP. Ce message contient des informations de synchronisation de références temporelles. De préférence, les informations sont déterminées sur la base de la ou des informations relatives aux caractéristiques du terminal indiquées dans le message d'abonnement 301.

Dans un mode de réalisation, un tel abonnement est valable pendant un temps déterminé à compter de la réception du message d'abonnement 301 par le serveur d'appels 102.

Dans un tel cas, le terminal 103 réitère régulièrement sa requête d'abonnement avant que ce temps déterminé ne soit expiré.

A cet effet, dans une phase 312 de renouvellement d'abonnement, le terminal émet à nouveau un message d'abonnement 307. Puis le serveur d'appels 102 y répond avec un message 308 ('200 OK').

De préférence, pour envoyer de telles informations de synchronisation au terminal, on utilise le protocole de communication MIME, pour "Multipurpose Internet Mail Extensions", tel que défini notamment dans les RFC 2045 à 2049 (RFC pour "Request For Comment").

De manière générale, ce protocole permet d'inclure autre chose que du texte dans un courrier électronique, c'est-à-dire des caractères spéciaux, des illustrations, des photos en couleur, des images vidéo ou du son haute-fidélité.

Dans un mode de réalisation, une référence temporelle transportée depuis le serveur d'appels jusqu'au terminal via le protocole MIME est une heure exprimée sous toute forme appropriée, par exemple sous la forme "heure, minutes, secondes".

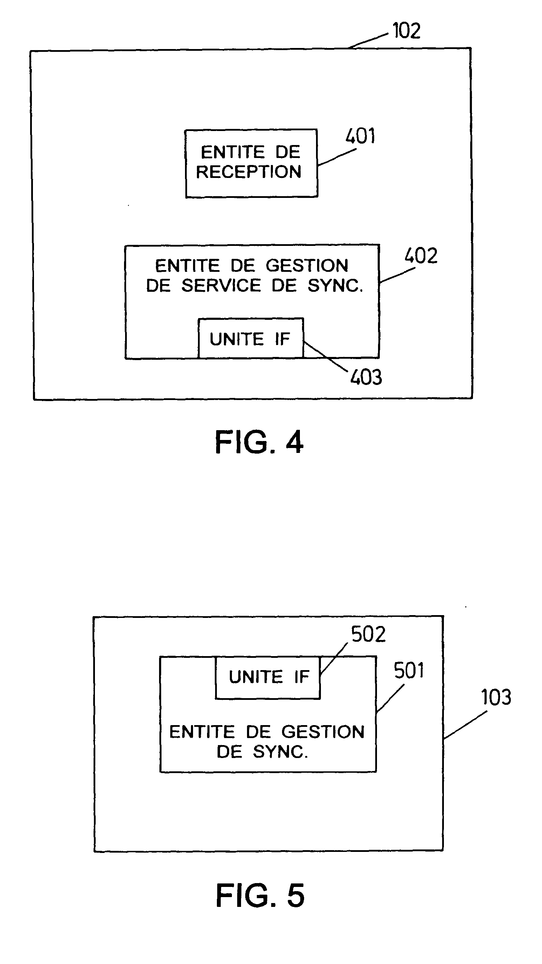

En référence à la figure 4, un mode de réalisation d'un serveur d'appels 102 comprend une entité de réception 401 adaptée pour recevoir des informations de synchronisation depuis le ou les serveurs de synchronisation. Il comprend également une entité de gestion de service de synchronisation de références temporelles 402 adaptée pour fournir le service de synchronisation aux terminaux sur la base des informations de synchronisation reçues depuis le serveur de synchronisation. Cette entité de gestion 402 comprend de préférence une unité d'interface 403 adaptée pour échanger des messages avec un terminal du réseau de téléphonie, sur la base du protocole SIP.

En référence à la figure 5, un mode de réalisation d'un terminal 103 comprend une entité de gestion de synchronisation de références temporelles 501 adaptée pour recevoir des informations de synchronisation de références temporelles depuis le serveur d'appels 102. L'entité 501 comprend de préférence une unité d'interface 502 adaptée pour échanger des messages avec un terminal, sur la base du protocole SIP.

Grâce aux dispositions de la présente invention, on est en mesure de fournir un service de synchronisation de références temporelles fiable, centralisé pour tous les terminaux IP d'un même réseau de téléphonie. Un tel service est avantageusement fourni indépendamment de toute session d'appel.

En outre, l'implémentation de la présente invention sur les terminaux est facile. Les terminaux peuvent ainsi rester des terminaux dits 'légers'.

Une telle architecture présente tous les avantages d'une architecture centralisée. Ainsi, ces terminaux peuvent être complètement indépendants de modifications qui seraient apportées aux protocoles utilisés par le serveur de synchronisation. En effet, seul le serveur d'appels gère la synchronisation de références temporelles des terminaux. En particulier, aucune modification d'interface du serveur de synchronisation n'induit une modification sur un quelconque des terminaux du réseau de téléphonie.

De plus, une telle architecture permet d'éviter que les terminaux IP ouvrent un ou plusieurs ports de service UDP ou TCP vers le serveur de synchronisation et affaiblissent ainsi la protection du réseau de téléphonie.

## Revendications

1. Procédé de synchronisation d'une référence temporelle d'un terminal (103) appartenant, d'une part, à un réseau de téléphonie (101) servi par au moins un premier serveur (102) et, d'autre part, à un réseau de transmission de données en mode paquets (100) comportant au moins un second serveur (104), comprenant les étapes consistant à :
/a/ recevoir au niveau du premier serveur au moins une référence temporelle provenant du second serveur ;
/b/ fournir un service de synchronisation au terminal (103) sur la base de la référence temporelle reçue au niveau du premier serveur (102), par envoi d'au moins un message de synchronisation (305) contenant ladite référence temporelle depuis le premier serveur à destination du terminal.

2. Procédé selon la revendication 1, comprenant en outre, avant l'étape /b/, une étape d'abonnement au service de synchronisation au cours de laquelle le terminal (103) envoie au premier serveur un message de requête d'abonnement (301) au service de synchronisation.

3. Procédé selon la revendication 2, suivant lequel au moins l'étape d'abonnement au service de synchronisation et l'étape /b/ sont réalisées selon le protocole SIP ("Session Initiation Protocol").

4. Procédé selon la revendication 2 ou 3, suivant lequel le premier serveur (102) reçoit une pluralité de références temporelles différentes depuis un ou plusieurs seconds serveurs du réseau de transmission de données ;
suivant lequel le message de requête d'abonnement (301) indique au moins une information relative à une caractéristique dudit terminal ;
et suivant lequel l'étape /b/ comprend les étapes consistant à :
- déterminer, parmi ladite pluralité de références temporelles, une référence temporelle donnée, sur la base de ladite information ;
- envoyer le message de synchronisation contenant ladite référence temporelle donnée.

5. Procédé selon la revendication 4, suivant lequel on déclenche l'envoi des messages en fonction de l'information indiquée dans le message de requête.

6. Procédé selon l'une quelconque des revendications précédentes, suivant lequel le service de synchronisation est fourni dans le cadre d'une session établie entre le premier serveur et le terminal, distincte d'une session d'appel téléphonique éventuellement établie entre le premier serveur et le terminal.

7. Serveur d'appels (102) d'un réseau de téléphonie (101), adapté pour fournir un service de synchronisation à au moins un terminal (103) appartenant, d'une part, audit réseau de téléphonie et, d'autre part, à un réseau de transmission de données en mode paquets (100) comportant au moins un serveur de réseau (104) ;
ledit serveur d'appels (102) comprenant :
- une entité de réception (401) adaptée pour recevoir au moins une référence temporelle depuis ledit serveur de réseau (104) ; et
- une entité de gestion de service de synchronisation adaptée pour fournir un service de synchronisation au terminal sur la base de la référence temporelle reçue depuis le serveur de réseau.

8. Serveur d'appels selon la revendication 7, dans lequel l'entité de gestion de service de synchronisation (402) est adaptée pour gérer une phase d'abonnement d'un terminal (103), au cours de laquelle il reçoit dudit terminal un message de requête d'abonnement (301) au service de synchronisation.

9. Serveur d'appels (102) selon la revendication 8, dans lequel l'entité de gestion de service de synchronisation est adaptée pour gérer la phase d'abonnement et fournir le service de synchronisation en échangeant avec le terminal des messages selon le protocole SIP ("Session Initiation Protocol").

10. Serveur d'appels selon la revendication 8 ou 9, dans lequel l'entité de gestion de service de synchronisation est adaptée pour gérer une pluralité de références temporelles et pour déterminer, parmi ladite pluralité de références temporelles, une référence temporelle donnée en fonction d'au moins une information relative à une caractéristique du terminal reçue au cours de la phase d'abonnement.

11. Serveur d'appels selon la revendication 10, dans lequel l'entité de gestion de service de synchronisation (402) est adaptée pour déclencher l'envoi des messages de synchronisation en fonction de l'information reçue au cours de la phase d'abonnement.

12. Serveur d'appels selon l'une quelconque des revendications 7 à 11, dans lequel l'entité de gestion de service de synchronisation (402) est adaptée pour gérer la phase d'abonnement et fournir le service de synchronisation dans le cadre d'une session établie avec le terminal, distincte d'une session d'appel téléphonique éventuellement établie avec le terminal.

13. Terminal (103) adapté pour opérer, d'une part, dans un réseau de téléphonie (101) comprenant un premier serveur (102) et, d'autre part, dans un réseau de transmission de données en mode paquets (100) comprenant au moins un second serveur;
ledit terminal (103) comprenant une entité de gestion de synchronisation de référence temporelle (501) adaptée pour recevoir une référence temporelle via un service de synchronisation fourni par ledit premier serveur sur la base d'au moins une référence temporelle reçue depuis ledit second serveur.

14. Terminal (103) selon la revendication 13, dans lequel l'entité de gestion de synchronisation (501) est en outre adaptée pour gérer une phase d'abonnement comprenant une étape d'émission à destination du premier serveur d'un message de requête d'abonnement (301) au service de synchronisation.

15. Terminal (103) selon la revendication 14, dans lequel l'entité de gestion de synchronisation (201) est adaptée pour gérer la phase d'abonnement et la réception de la référence temporelle en échangeant avec le premier serveur des messages selon le protocole SIP.

16. Terminal (103) selon la revendication 14 ou 15, dans lequel l'entité de gestion (501) est adaptée pour inclure au moins une information relative à une caractéristique dudit terminal dans le message de requête d'abonnement (301), laquelle information permettant au premier serveur de déterminer une référence temporelle à envoyer au terminal.

17. Terminal selon l'une quelconque des revendications 13 à 16, dans lequel l'entité de gestion de synchronisation est adaptée pour gérer la phase d'abonnement et la réception d'une référence temporelle dans le cadre d'une session établie avec le premier serveur, distincte d'une session d'appel téléphonique éventuellement établie avec le premier serveur.

18. Système adapté pour fournir une référence temporelle à un terminal (103) appartenant, d'une part, à un réseau de téléphonie (101) et, d'autre part, à un réseau de transmission de données en mode paquets (100),
ledit système comprenant :
- un serveur d'appels (102) selon l'une quelconque des revendications 7 à 12;
- un terminal (103) selon l'une quelconque des revendications 13 à 17 ; et
- un serveur de réseau (104) compris dans ledit réseau de transmission de données en mode paquet (100), ledit serveur de réseau étant adapté pour fournir une référence temporelle audit premier serveur.
